(19) Europäisches Patentamt
European Patent Office
Office européen des brevets

(11) **EP 1 725 931 B1**

(12) **EUROPEAN PATENT SPECIFICATION**

(45) Date of publication and mention
of the grant of the patent:
**18.11.2009 Bulletin 2009/47**

(21) Application number: **05708803.1**

(22) Date of filing: **18.02.2005**

(51) Int Cl.:
**G06F 7/72** (2006.01)

(86) International application number:
**PCT/IB2005/050614**

(87) International publication number:
**WO 2005/088440 (22.09.2005 Gazette 2005/38)**

(54) **METHOD FOR MULTI-EXPONENTIATION OR MULTI-SCALAR MULTIPLICATION**

VERFAHREN ZUM EXPONENTIEREN ODER SKALAREN MULTIPLIZIEREN VON MEHREREN ELEMENTEN

PROCEDE POUR L'ELEVATION A UNE PUISSANCE OU LA MULTIPLICATION SCALAIRE DE PLUSIEURS ELEMENTS

(84) Designated Contracting States:
**AT BE BG CH CY CZ DE DK EE ES FI FR GB GR HU IE IS IT LI LT LU MC NL PL PT RO SE SI SK TR**

(30) Priority: **04.03.2004 EP 04100873**

(43) Date of publication of application:
**29.11.2006 Bulletin 2006/48**

(73) Proprietor: **NXP B.V.**
**5656 AG Eindhoven (NL)**

(72) Inventor: **AVANZI, Roberto,**
**Philips Int. Prop. & Stand. GmbH**
**52066 Aachen (DE)**

(74) Representative: **Schouten, Marcus Maria et al**
**NXP B.V.**
**IP & L Department**
**High Tech Campus 32**
**5656 AE Eindhoven (NL)**

(56) References cited:
• **MÖLLER B: "Improved techniques for fast exponentiation" INFORMATION SECURITY AND CRYPTOLOGY - ICISC 2002. 5TH INTERNATIONAL CONFERENCE. REVISED PAPERS (LECTURE NOTES IN COMPUTER SCIENCE VOL.2587) SPRINGER-VERLAG BERLIN, GERMANY, 2003, pages 298-312, XP002324484 ISBN: 3-540-00716-4**

**Description**

The present invention relates to a method for the multi-exponentiation $\Pi_{i=1}{}^d g_i{}^{e_i}$ or the multi-scalar multiplication $\Sigma_{i=1}{}^d e_i \cdot g_i$ of elements $g_i$ by means of exponents or scalars $e_i$, in particular integer exponents or scalars, which have in each case a maximum bit rate $n$ or bit length, which elements $g_i$ derive from at least one group $G$, for example an Abelian group $G$, which

- in the case of multi-exponentiation is notated in particular multiplicatively and
- in the case of multi-scalar multiplication is notated in particular additively (cf. for the case d = 1 the prior art article "Improved Techniques for Fast Exponentiation" by Bodo Möller, Information Security and cryptology - ICISC 2002, fifth international conference revised papers (lecture notes in Computer Science vol. 2587), Springer-Verlag Berlin, Germany, 2003, pages 298 to 312, ISBN 3-540-00716-4).

In asymmetric encryption methods or public key cryptosystems which are based on the insolvability of the discrete logarithm problem in Abelian groups, the exponentiation $g^n$ of a group element $g$ or the multi-exponentiation $g_l{}^{n_l} \cdot h_k{}^{n_k}$ of a number of group elements $g$, $h$ is one of the fundamental operations in signature and key exchange methods. Acceleration of this fundamental operation is therefore of particular importance.

The possibility of precomputing powers of the group element $g$ presents the problem that in this case the group element $g$ which is used must be known beforehand. This is not the case for example in the case of signature verification in the D[igital]S[ignature]A[lgorithm] or in the E[lliptic]C[urve] D[igital]S[ignature]A[lgorithm] or in the Diffie-Hellman key exchange method. Added to this is the fact that, on smart cards for example, there is not enough storage space to store a sufficiently large number of precomputed elements.

Another possibility lies in recoding the exponent used; this possibility is independent of the choice of group element $g$ and is therefore particularly attractive for accelerating the abovementioned signature and key exchange methods.

The techniques for recoding the exponent used in algorithms for (multi-)exponentiation are based on the fundamental idea that an integer is rewritten in a different form than the usual binary representation, namely with a lower density and with coefficients in a finite set of integers $C$ which contains at least the elements 0 and 1.

If, in the specific group in which the computation is carried out, the inversion, of an element is "gratis", that is to say if the computational complexity for the inversion is very low compared to the other group operations, and if use is made of signed coefficients, then it can always be assumed that $c \, \varepsilon \, C$ also implies $-c \, \varepsilon \, C$. If the inversion is complicated in computational terms, all the elements of the set $C$ are non-negative integers.

A so-called "square-and-multiply" exponentiation algorithm for the computation of $g^e$, wherein $g$ is a group element and e is an integer, then operates in a known manner as follows:

- $e$ is written as $\Sigma_{i=0}{}^n e_i 2^i$, wherein each coefficient $e_i$ lies in $C$;
- the elements $g^{e_n}$ are either given or are computed beforehand;
- the temporary variable x is set to $g^{e_n}$;
- for all $i = n$-1, $n$-2, ..., 0, $x$ is first squared and then, if the coefficient $e_i$ is non-vanishing, multiplied by the element $g^{e_i}$;
- following the last squaring operation carried out for $i = 0$ and where appropriate (namely if coefficient $e_0$ is non-vanishing) following the multiplication by the element $g^{e_0}$, the value of the temporary variable $x$ is the desired result $g^e$.

The number of group operations is then approximately equal to the number of non-vanishing coefficients $e_i$ in the representation $\Sigma_{i=0}{}^n e_i 2^i$ of the exponent $e$ (these group operations are multiplications either by precomputed or given group elements or, if the inversion of group elements is fast, by the inverses thereof) plus

- the length $n$ of the representation (the corresponding, for example $n$, operations are in this case squaring operations) and.
- the cardinality of the table of elements $g^c$, wherein $c \, \varepsilon \, C$ and $c$ is not equal to zero, or
- half this cardinality if the inversion in the given group is fast and the coefficients $e_i$ are signed.

A good match between the size of $C$ and the density of the representation is the path to optimal performance in the representation of the exponent.

Examples of exponent recoding include:

- the N[on]A[djacent]F[orm] (cf. G. W. Reitwiesner, "Binary arithmetic", Advances in Computers 1, pages 231 to 308, 1960; S. Arno and F. S. Wheeler, "Signed digit representations of minimal Hamming weight", IEEE Transactions on Computers 42, 1993, pages 1007 to 1010);

- the same-weight method similar to the N[on]A[djacent]F[orm] (cf. M. Joye and S.-M. Yen, "Optimal left-to-right binary signed-digit recoding", IEEE Transactions on Computers 49 (7), 2000, pages 740 to 748);
- recoding for exponentiation with fixed windows (cf. J. Bos and M. Coster, "Addition chain heuristics", in Advances in Cryptology - CRYPTO '89, LNCS 435, 1990, pages 400 to 407; A. Menezes, P. van Oorschot and S. Vanstone, "Handbook of Applied Cryptography", CRC Press, 1996);
- the G[eneralized]N[on]A[djacent]F[orm] (cf. W. E. Clark and J. J. Liang, "On arithmetic weight for a general radix representation of integers", IEEE Transactions on Information Theory IT-19, 1973, pages 823 to 826);
- "sliding windows" (cf. E. G. Thurber, "On addition chains 1(mn) ≤ 1(n)b and lower bounds for c(r)", Duke Mathematical Journal 40, 1973, pages 907 to 913; A. Menezes, P. van Oorschot and S. Vanstone, "Handbook of Applied Cryptography", CRC Press, 1996), optionally on the N[on]A[djacent]F[orm] or on other redundant base-2 representations (cf. R. Avanzi, "On the complexity of certain multi-exponentiation techniques in cryptography", published in Journal of Cryptology; K. Koyama and Y. Tsuruoka, "Speeding up elliptic cryptosystems by using a signed binary window method", in E. Brickell (Ed.), "Advances in Cryptology, Proceedings of Crypto '92", Lecture Notes in Computer Science Volume 740, pages 345 to 357, Springer-Verlag, 1992; cf. also K. Koyama, Y. Tsuruoka, "A Signed Binary Window Method for Fast Computing over Elliptic Curves", IEICE Trans. Fundamentals, Volume E76-A, No. 1, pages 55 to 62, January 1993); and the
- w[indow]N[on]A[djacent]F[orm] (cf. J. A. Solinas, "An improved algorithm-for arithmetic on a family of elliptic curves", in Advances in Cryptology - CRYPTO '97, B. S. Kaliski jr. (Ed.), Lecture Notes in Computer Science Volume 1294, pages 357 to 371; H. Cohen, "Analysis of the flexible window powering algorithm", Advance copy available at http://www.math.u-bordeaux.fr/~cohen/).

With regard to exponent recoding, however, it should be considered that this recoding may in many cases not take place "online", that is to say during the exponentiation itself; for this reason, the recoded exponents must first be stored. However, this storage, requirement is disadvantageous in particular in extremely restricted environments, such as in smart cards for example, since in such an extremely restricted environment each byte of the memory is "precious".

Based on the abovementioned disadvantages and shortcomings, and with reference to the outlined prior art, it is an object of the present invention to further develop a method of the type mentioned above in such a manner that the requirement in terms of storage space for recoded exponents or scalars is reduced as much as possible even and especially in extremely restricted environments, such as in smart cards for example.

This object is achieved by a method having the features specified in claim 1. Advantageous embodiments and expedient developments of the present invention are characterized in the dependent claims.

The present invention is thereby based on the principle of almost-online recoding for multi-exponentiation or multi-scalar multiplication in restricted environments; in this connection, "almost-online" recoding means that the exponent or scalar is split into sections which are individually recoded and the recoding of which takes place in layers between parts of the (multi-)exponentiation or the (multi-)scalar multiplication.

The technique of "almost-online" recoding may be used to reduce the storage requirement for the recoded exponents or for the recoded scalars. The effects of almost-online recoding on the total running time of the (multi-)exponentiation or the (multi-)scalar multiplication are usually minimal.

Based on the abovementioned exemplary recoding operations, in the method according to the present invention it is assumed that the recoding in the case of multi-exponentiation or multi-scalar multiplication is of the form $e_i = \Sigma_{j=0}^{n} b_{i,j} 2^j$; wherein $n = |\log_2 e_i|$ is the bit length of $e_i$, that is to say this bit length $n$ is at most one bit longer than the binary representation. In other words, this means that $n+1$ is to be understood as the maximum length of any exponent or scalar $e_i = \Sigma_{j=0}^{n} b_{i,j} 2^j$.

It is furthermore assumed that the recoded algorithm depends - possibly not explicitly - on a parameter $w$ which usually corresponds to the width of a window over which the bits of the exponents or scalars $e_i$ are read, or to the upper limit of such a width.

On this basis, according to the teaching of the present invention, the multi-exponentiation which can be expressed by symbols in the notation $\prod_{i=1}^{d} g_i^{e_i}$, in the case of a multiplicatively notated group, in particular an Abelian group, $G$, takes place in the following steps:

firstly:        selecting a chunk or part width $L$ which may be significantly greater than the parameter $w$ and significantly shorter than the maximum length of any exponent $e_i$;
then:
[a.1] computing and storing or
[a.2] retrieving from a memory
all powers $g_i^c$,
wherein        $g_i$ is an element of the group $G$ and

$c$ is a permissible positive coefficient;

[b] dividing each exponent $e_i$, in particular an integer exponent, into a number of chunks or into a number of parts $e_{i,k}$ having the chunk or part width $L$ selected above,

[b.1] wherein the exponent $e_i$ can be written in the divided form $e_i = \Sigma_{k=0}{}^{r} e_{i,k} 2^{kL}$ where $0 \leq e_{i,k} < 2^L$, and

[b.2] wherein the number $r$ of chunks or parts $e_{i,k}$ can be defined in particular as an integer quotient of the maximum bit rate $n$ and the bit rate $L$ of the chunk or part width;

[c] individually recoding the chunks or parts $e_{i,k}$, wherein this recoding can be divided into the following substeps for each individual chunk or for each individual part $e_{i,k}$ of each exponent $e_i$:

[c.1] setting a temporary variable $x$ to a standardized value, in particular to the value 1, wherein 1 denotes the neutral element of the group $G$ with respect to the group operation assigned to the group $G$;

[c.2] setting a variable $k$ to the values $r$-1, $r$-2, ..., 0 (one after the other), wherein for each such value $k = r$-1, $r$-2, ..., 0 of the variable $k$ the following substeps are carried out:

[c.2.i] for each value $i$ =1, 2, ..., $d$ of an index $i$, wherein $d$ is defined as the number of elements $g_i$ and of exponents $e_i$ assigned to the elements $g_i$:

[c.2.i.a] recoding the chunk or part $e_{i,k}$ as the sum $\Sigma_{j=0}{}^{L} b_{i,j} 2^j$ of powers of two $2^j$ weighted by in each case a coefficient $b_{ij}$ deriving from a finite set $C$ of integers;

[c.2.i.b] if the coefficient $b_{i,L}$ assigned to the highest power of two $2^L$ does not vanish: setting the temporary variable $x$ to the product of $x$ and the power $g_i^{b_{i,L}}$ of the element $g_i$ which is assigned to the coefficient $b_{i,L}$ of the highest power of two $2^L$ ;

[c.2.ii] for each value $j = L$-1, $L$-2, ..., 0 of the index $j$:

[c.2.ii.a] squaring the temporary variable $x$;

[c.2.ii.b] for each value $i = 1, 2, ..., d$ of the index $i$:

if the coefficient $b_{i,j}$ assigned to the power of two $2^j$ does not vanish: setting the temporary variable $x$ to the product of $x$ and the power $g_i^{b_{i,j}}$ of the element $g_i$ which is assigned to the coefficient $b_{i,j}$ of the power of two $2^j$;

finally:     returning $x$.

The special case of (single) exponentiation is obtained above for $d$ = 1, that is to say when there is a single element $g$ and a single exponent e assigned to the element g, which can de facto be equated with omitting the index $i$; in this case, an element $g$ is therefore exponentiated by an exponent e, in particular an integer exponent, having a maximum bit rate $n$ or bit length, to form a power $g^e$, wherein the element $g$ once again derives from a multiplicatively notated Abelian group $G$.

In an analogous manner, according to the teaching of the present invention, the multi-scalar multiplication which can be expressed by symbols in the notation $\Sigma_{i=1}{}^{d} e_i g_i$, in the case of an additively notated group, in particular an Abelian group, $G$, takes place in the following steps:

firstly:       selecting a chunk or part width $L$ which may be significantly greater than the parameter $w$ and significantly shorter than the maximum length of any scalar $e_i$;

then:

[a.1] computing and storing or

[a.2] retrieving from a memory

all multiples $c'g_i$,

wherein        $c$ is a permissible positive coefficient and

$g_i$ is an element of the group $G$;

[b] dividing each scalar $e_i$, in particular an integer scalar, into a number of chunks or into a number of parts $e_{i,k}$

having the chunk or part width $L$ selected above,

[b.1] wherein the scalar $e_i$ can be written in the divided *form* $e_i = \Sigma_{k=0}^{r} e_{i,k} 2^{kL}$ where $0 \leq e_{i,k} < 2^L$, and

[b.2] wherein the number r of chunks or parts $e_{i,k}$ can be defined in particular as an integer quotient of the maximum bit rate $n$ and the bit rate $L$ of the chunk or part width;

[c] individually recoding the chunks or parts $e_{i,k}$, wherein this recoding can be divided into the following substeps for each individual chunk or for each individual part $e_{i,k}$ of-each scalar $e_i$:

[c.1] setting a temporary variable $x$ to a standardized value, in particular to the value 0, wherein 0 denotes the neutral element of the group $G$ with respect to the group operation assigned to the group $G$;

[c.2] setting a variable $k$ to the values $r$-1, $r$-2, ..., 0 (one after the other), wherein for each such value $k = r$-1, $r$-2, ..., 0 of the variable $k$ the following substeps are carried out:

[c.2.i] for each value $i$ = 1, 2, ..., $d$ of an index $i$, wherein $d$ is defined as the number of elements $g_i$ and of scalars $e_i$ assigned to the elements $g_i$:

[c.2.i.a] recoding the chunk or part $e_{i,k}$ as the sum $\Sigma_{j=0}^{L} b_{i,j} 2^j$ of powers of two $2^j$ weighted by in each case a coefficient $b_{i,j}$ deriving from a finite set $C$ of integers;

[c.2.i.b] if the coefficient $b_{i,L}$ assigned to the highest power of two $2^L$ does not vanish: setting the temporary variable $x$ to the sum of $x$ and the multiple $b_{i,L} \cdot g_i$ of the element $g_i$ which is assigned to the coefficient $b_{i,L}$ of the highest power of two $2^L$;

[c.2.ii] for each value $j$ = $L$-1, $L$-2, ..., 0 of the index $j$:

[c.2.ii.a] doubling the temporary variable $x$;

[c.2.ii.b] for each value $i$ = 1, 2, ..., $d$ of the index $i$:

if the coefficient $b_{i,j}$ assigned to the power of two $2^j$ does not vanish: setting the temporary variable $x$ to the sum of $x$ and the multiple $b_{i,j} g_i$ of the element $g_i$ which is assigned to the coefficient $b_{i,j}$ of the power of two $2^j$;

finally:        returning $x$.

The special case of (single) scalar multiplication is obtained above for $d$ = 1, that is to say when there is a single element $g$ and a single scalar e assigned to the element $g$, which can de facto be equated with omitting the index $i$; in this case, an element $g$ is therefore multiplied by a scalar $e$, in particular an integer scalar, having a maximum bit rate $n$ or bit length, to give a product $e \cdot g$, wherein the element $g$ once again derives from an additively notated Abelian group G.

According to the present invention,

- the recoded chunk or the recoded part $e_{i,k}$ is used once and
- the memory unit in which the recoded chunk or the recoded part $e_{i,k}$ is stored is used to recode the following chunk or the following part $e_{i,k-1}$,

so that the storage requirement of multi-exponentiation algorithms or multi-scalar multiplication algorithms based on right-to-left recoding of integers can be considerably reduced.

The present invention furthermore relates to a microprocessor which operates in accordance with a method of the type described above.

The present invention furthermore relates to a device, in particular a chip card and/or in particular a smart card, having at least one microprocessor of the type described above.

The present invention finally relates to the use

- of a method of the type described above and/or
- of at least one microprocessor of the type described above and/or
- of at least one device, in particular of at least one chip card and/or in particular of at least one smart card, of the type described above

in at least one cryptosystem, in particular in at least one public key cryptosystem, in at least one key exchange system or in at least one signature system.

As already mentioned above, there are various possibilities for advantageously implementing and developing the teaching of the present invention. In this respect, on the one hand reference is made to the claims dependent on claim 1 and on the other hand further embodiments, features and advantages of the present invention will be described in more detail below on the basis of the exemplary implementation of five examples wherein

- the first example relates to the method of single exponentiation,
- the second example of embodiment relates to the method of multi-exponentiation and
- the third example of embodiment likewise relates to the method of multi-exponentiation,

that is to say based on a multiplicative notation for the Abelian group $G$, and wherein

- the fourth example relates to the method of single scalar multiplication and
- the fifth example of embodiment relates to the method of multi-scalar multiplication,

that is to say based on an additive notation for the Abelian group $G$ (in the case of such an additive notation for the Abelian group $G$, compared to the multiplicative notation for the Abelian group $G$ in the above section "Prior art", changes and replacements will of course have to be made, and these are obvious from the different wordings between claim 4 [<--> (multi-)exponentiation: neutral element "1"; "squaring"; "product"] and claim 5 [<--> (multi-)scalar multiplication: neutral element "0"; "doubling"; "sum"].

The five examples shown below in respect of the present invention are used for a general technique in the form of so-called almost-online recoding, which can be used to considerably reduce the storage requirement of

- single exponentiation algorithms (cf. first example),
- multi-exponentiation algorithms (cf. second example of embodiment and third example of embodiment),
- single scalar multiplication algorithms (cf. fourth example) or
- multi-scalar multiplication algorithms (cf. fifth example of embodiment) which are based on right-to-left recoding of integers.

The technique of almost-online recoding may be very useful in extremely restricted environments, such as in chip cards or in smart cards for example, wherein the saving in terms of storage space may depend considerably on the specific situation (possibly, a throughput loss which is nevertheless very low may occur, particularly when the exponent or scalar is divided into too many small parts (= into too many small "chunks"); the effect on performance may then be noticeable).

**First example: single exponentiation**

If $G$ is an Abelian group with an order of $2^n$, and it is assumed that an element $g \, \varepsilon \, G$ and an integer e are given, the aim is to compute $x = g^e$ as quickly as possible. The recoding makes the exponentiation very quick, but this recoding cannot be used online, that is to say cannot take place during the exponentiation itself; this is the case for example in the w[indow]N[on]A[djacent]F[orm].

The technique used in almost-online recoding consists in dividing the exponents e into a number of "exponent chunks", that is to say into a number of exponent sections or into a number of exponent parts which are considerably longer than w bits but also much shorter than e. The chunks or parts are then recoded individually, used once, and then the memory in which the-chunks or parts were stored is reused to recode the next chunk or the next part, so that the total storage space required for the exponents $n$ can be significantly reduced.

The almost-online recoding shown below takes place under the assumption that tube chunks or parts have a length of $L$ bits. The reason that $L$ is much greater than $w$ is that the estimates for the number of non-vanishing coefficients in recoded exponents are usually given asymptotically, but the actual number of non-vanishing coefficients in recoded exponents is sometimes greater on account of a small additive constant, and this is shown below on the basis of a specific example.

Hereinbelow, within the context of the first example of almost-online recoding, an algorithm is presented in which the following are entered:

- a basic element $g$ of the Abelian group $G$,
- an integer e having $n$ bits,
- a window width $w$ and
- a chunk or part width $L \gg w$;

the single exponentiation $g^e$ is output:

Step 1. $x \leftarrow 1$

Step 2. $r \leftarrow \lceil n/L \rceil$, then $e = \sum_{k=0}^{r-1} e_k 2^{kL}$ for $0 \leq e_k < 2^L$

Step 3. for $k = r-1$ downto 0 do {

(a) recode

(b) if $b_L \neq 0$ then $x \leftarrow x \cdot g^{b_L}$

(c) for $j = L-1$ downto 0 do {

(i) $x \leftarrow x^2$

(ii) $x \leftarrow x \cdot g^{b_j}$}}

Step 4. return $x$

It should be noted here that it may happen after $L$ bits that the above algorithm carries out two group multiplications in a row instead of only one group multiplication. This happens if one of the chunks $e_i$ (= one of the exponent parts $e_i$) represents an uneven number and if the recoding of the following chunk $e_{i+1}$ (= of the following exponent part $e_{i+1}$) is one coefficient longer ($b_L$ not equal to zero).

Using a specific example in which the selected recoding is the w[indow]N[on]A[djacent]F[form], it can now be shown that the loss in terms of speed is minimal and that the saving in terms of storage space may be quite great:

For $n = 160$, the optimal value of $w$ is equal to 5 (cf. H. Cohen, "Analysis of the flexible window powering algorithm", advance copy obtainable at http://www.math.u-bordeaux.fr/~cohen/); seven powers $g^3$, $g^5$, $g^7$, $g^9$, $g^{11}$, $g^{13}$, $g^{15}$ of the basic element $g$ thus have to be precomputed, and $g^2$ is also temporarily required. At least five bits per recoded coefficient are required, but the implementor uses presumably complete signed bytes.

Two recoded exponents require 320 bytes of R[andom]A[ccess]M[emory], but two recoded 32-bit chunks (= 32-bit sections or 32-bit parts) require only 66 bytes of R[andom]A[ccess]M[emory]. The 254 bytes of R[andom]A[ccess]M[emory] which are saved may be used to store six points of an elliptic curve in affine coordinates.

Cohen has now proven (cf. H. Cohen, "Analysis of the flexible window powering algorithm", advance copy obtainable at http://www.math.u-bordeaux.fr/~cohen/) that the average Hamming weight of the w[indow]N[on]A[djacent]F[orm] of an integer having n bits (which is the average number of multiplications in the corresponding exponentiation plus one) is equal to

$$n/(w+1) + 1 - 0.5(w\text{-}1)(w+2)/(w+1)^2 + O(\rho^{-n}),$$

wherein $\rho = \rho(w)$ is a real number greater than one which is dependent only on $w$ and not on $n$. In numerical terms,

$$\rho = 2^{1/2} = 1.414... \text{ for } w = 3,$$

$$\rho = 1.2157... \text{ for } w = 4$$

and

$$\rho = 1.1296... \text{ for } w = 5.$$

The above set with regard to the average Hamming weight of the w[indow]N[on]A[djacent]F[orm] implies that, when an integer is split into $r$ chunks or into $r$ parts, the total Hamming weight of the $r$ chunks or $r$ parts is

$$(r\text{-}1)(1\text{-}0.5(w\text{-}1)(w+2)/(w+1)^2)$$

times greater than the Hamming weight of the original integer.

In the case where $n = 160$, there may be selected $L = 32$ and consequently $r = 5$. The "flexible window" method requires on average $22/9 = 2.44$ fewer group operations than the almost-online method. This difference is approximately 1.26 percent of the overall running time of the exponentiation algorithm (over the 193 group operations, including the time for the precomputations); however, the storage requirement for the recoded exponents has been reduced by approximately eighty percent.

**Second example of embodiment: multi-exponentiation**

The above algorithm from the first example (single exponentiation) can be transformed into a multi-exponentiation method.

If group elements $g_1, ..., g_d \varepsilon G$ and exponents $e_1, ..., e_d$ where $d > 1$ are given and $\prod_{i=1}^{d} g_i^{e_i}$ is to be computed, firstly a decision is made to use a sparse recoding of the exponents $e_1, ..., e_d$; use is then made of a "square-and-multiply" loop:

Firstly, all the powers $g_i^c$ are computed and stored, wherein $c$ is a permissible positive coefficient. A temporary variable $x$ is then set to $1 \varepsilon G$. For $j = n, n\text{-}1, ..., 0$, $x$ is first squared, and for $i = 1, ..., d$ the squared $x$ is multiplied by $g_i^{e_{i,j}}$, wherein $e_{i,j}$ is the coefficient of $2^j$ in the recoding of $e_i$. At the end, the temporary variable $x$ contains the desired result.

This method is also referred to as fast exponentiation; as in the situation according to the first example, it is once again desirable to retain the advantages of a good right-to-left recoding without having to use too much memory.

The following variant carries out recoding "almost-online", that is to say almost during the fast multi-exponentiation or shortly after the fast multi-exponentiation, wherein the following are entered in the algorithm

- basic elements $g_1, ..., g_d$ of the Abelian group $G$,
- integers $e_1, ..., e_d$ ($d > 1$) each having at most $n$ bits,
- a window width $w$,
- a chunk or part width $L >> w$ and
- precomputed powers $g_i^c$ for all c in the set of coefficients;

the multi-exponentiation $\prod_{i=0}^{d} g_i^{e_i}$ is output:

Step 1. $x \leftarrow 1$
Step 2.
$$r \leftarrow \lceil n/L \rceil, \text{ then } e_i = \sum_{k=0}^{r-1} e_{i,k} 2^{kL} \text{ for } i = 1... d$$

Step 3. for $k = r\text{-}1$ down to 0 do {
    (a)       for $i = 1$ to $d$ do {

$$\text{recode } (e_{i,k}) \rightarrow e_{i,k} = \sum_{j=0}^{L} b_{i,j} 2^j$$

            if $b_{i,L} \neq 0$ then $x \leftarrow x \cdot g_i^{b_{i,L}}$ }
    (b)       for $j = L\text{-}1$ downto 0 do {
        (i)       $x \leftarrow x^2$
        (ii)     for $i = 1$ to $d$ do {if $b_{i,L} \neq 0$ then $x \leftarrow x \cdot g_i^{b_{i,\varphi}}$ }
       }        }
Step 4. return $x$

The comments made in respect of the algorithm according to the first example are also relevant here, that is to say in the case of elliptic curves over a finite field where $n = 160$ and $L = 32$, $2.44d$ group operations are used, wherein $d$ is the number of powers which are to be multiplied by one another. Although this is more than in the case of single fast exponentiation, $254d$ bytes of R[andom]A[ccess]M[emory] can be saved, that is to say storage for 6d precomputed points in affine coordinates.

### Third example of embodiment: Multi-exponentiation with parallel shifting windows

In the third example of embodiment, the use of almost-online recoding is described in a generalization (cf. R. Avanzi, "On the complexity of certain multi-exponentiation techniques in cryptography", published in Journal of Cryptology) of an algorithm by Yen, Laih and Lenstra (cf. S.-M. Yen, C.-S. Laih and A. K. Lenstra, "Multi-exponentiation", IEE Proc. Comput. Digit. Tech., Volume 141, No. 6, November 1994).

In this connection, this third example of embodiment described below serves predominantly to explain the basic principles of the described algorithm; the increase in efficiency which can be achieved must be deemed to be rather small. The algorithm is essentially a variant of the trick by Shamir using a sliding window and is shown below:

The following are entered in the algorithm:

- a window width $w$,
- integers $e_i = \Sigma_{j=0}^{n} e_{i,j} 2^j$ and

- a set E of precomputed elements from the group G of the form $\prod_{i=1}^{d} g_i^{k_i}$ including $g_1, ..., g_d$ (the set $E$ is highly dependent on the window width w and on the representation of the integers $e_i$; cf. the comments made after the algorithm below);

the multi-exponentiation $\prod_{i=1}^{d} g_i^{e_i}$ is output:

Step 1.   $t \leftarrow n$ and $x \leftarrow 1 \in G$

Step 2.   if ($e_{i,t-1} = 0$ for $i = 1,2,...,d$) then {
  (a) $t \leftarrow t\text{-}1$ and $x \leftarrow x^2$
  } else {
  (b)   if $t \geq w$ then $t \leftarrow t\text{-}w$ else {$w \leftarrow t$ and $t \leftarrow 0$}
  (c)
        for $i = 1,2,...,d$ do $f_i \leftarrow \sum_{j=0}^{w-1} e_{i,t+j} 2^j$
  (d)   if $s$ is the greatest natural number $s \geq 0$ such that $2s | f_i$ for all $i$
  (e)   for $i = 1,2, ..., d$ do $f_i \leftarrow f_i / 2^s$
  (f)
        (i) $x \leftarrow x^{2^{w-s}}$ ; (ii) $x \leftarrow x \cdot \prod_{i=1}^{d} g_i^{f_i}$ and (iii) $x \leftarrow x^s$ }

Step 3.   if $t = 0$ then return $x$ else goto step 2

In this respect, it should be noted that $f_i$ at the start of step 2.(c) is the integer represented by a chain of $w$ successive bits of the exponent $e$. After the standardization step 2.(e), at least one of the $f_i$ is uneven.

If in the group $G$ the inversion of elements takes place quickly, the N[on]A[djacent]F[orm] is selected as the recoding. It can easily be seen that the number of signed integers having $w$ bits in the N[on]A[d]acent]F[orm] is $I_w = (2^{w+2}-(-1)^w/3$. The set $E$ contains all the elements of the form $\prod_{i=1}^{d} g_i^{k_i}$ such that

- $|k_i| \leq T_w$ for $i=1,2,..., d$,
- at least one of the $k_i$ is uneven and
- the first non-vanishing value from the sequence $k_1, k_2, ..., k_p$ is positive.

In this way, step 2.(f)(ii) may be carried out either by a multiplication or by a division. The cardinality of E is $(I_w^d - I_{w-1}^d)/2$.

The parameters $w = 2 = d$ are then fixed and the N[on]A[djacent]F[orm] is selected for recoding the exponents. The reason for this is the production of digital signatures with elliptic curves (cf. American National Standards Institute, "ANSI X9.62: Public Key Cryptography for the Financial Services Industry: The Elliptic Curve Digital Signature Algorithm (ECDSA), 1999):

In this case, $d = 2$, and for the relevant size of the exponents, namely from $n = 160$ to $n = 240$, the Parameter $w = 2$ is optimal (cf. R. Avanzi, "On the complexity of certain multi-exponentiation techniques in cryptography", published in Journal of Cryptology). The above algorithm from the third example of embodiment is thus used for almost-online multi-exponentiation with $d = 2 = w$ and the N[on]A[djacent]F[orm], wherein the following are entered in the algorithm

- two (basic) elements $g_1$, $g_2$ of the Abelian group G,
- two natural numbers $e_1$, $e_2$ each having at most n bits and
- a chunk or part width L where n » $L$ » 2;

the double exponentiation $g_1^{e1} \cdot g_2^{e2}$ is output:

Step 1. Precompute the 8 elements where either $0 < a \le 2$ and $-2 \le b \le 2$,
wherein at least one of $a$, $b$ is uneven, or $a = 0$ and $b = 1$. [see note A.2]

Step 2. $x \leftarrow$

$r \leftarrow \lceil n/L \rceil$, then $e_i = \sum_{k=0}^{r-1} e_{i,k} 2^{kL}$ for $i = 1,2$ with $0 \le e_{i,k} < 2^L$

Step 3. for $k = r - 1$ downto 0 do {

    (a) for $i = 1,2$ do recode $e_{i,k}$ as NAF : $v_i :=$
        $a_1 \leftarrow 0$, $a_2 \leftarrow 0$

    (b) if $(v_{1,L}, v_{2,L}) \ne (0,0)$ then {
        (i)     if $(v_{1,L-1}, v_{2,L-1}) = (0,0)$ then
        (ii)         else $\{a_1 \leftarrow v_{1,L}, a_2 \leftarrow v_{2,L}\}$ }

    (c) for $j = L - 1$ downto 0 do {
        (i)     $x \leftarrow x^2$
        (ii)     if $(v_{1,j}, v_{2,j}) \ne (0,0)$ then {
            if         $(a_1, a_2) \ne (0,0)$ then {
        (iii)     $a_1 \leftarrow 2a_1 + v_{1,j}$, $a_2 \leftarrow 2a_2 + v_{2,j}$
        (iv)

$$x \leftarrow x \cdot (g_1^{a_1} \cdot g_2^{a_2}) \quad (\text{or: } x \leftarrow x/(g_1^{-a_1} \cdot g_2^{-a_2}))$$

        } else {
            if $(j > 0$ and $(v_{1,j-1}, v_{2,j-1}) \ne (0,0))$ then {
        (v)         $a_1 \leftarrow v_{1,\varphi}, a_2 \leftarrow v_{2,\varphi}$
        } else {
        (vi)

$$x \leftarrow x \cdot (g_1^{v_{1,j}} \cdot g_2^{v_{2,j}}) \quad (\text{or : } x \leftarrow x/(g_1^{-v_{1,j}} \cdot g_2^{-v_{2,j}}))$$

        }}}
    } *(End of inner for loop)*
    } *(End of outer for loop)*

Step 4. return x

It should be noted here that in step 3 the two interleaved loops of the above algorithm from the first example and the simultaneous sequential interrogation of the above first algorithm from the third example of embodiment can be seen.

In steps 3.(c)(ii), 3.(c)(iii), 3.(c)(iv), 3.(c)(v), 3:(c)(vi), windows of width 2 are formed via the coupled N[on]A[djacent]F[orm]s of two chunks or of two parts having L bits.

Two "carry-overs" $a_1$ and $a_2$ store the values of a non-vanishing column if the following column is also non-vanishing, so that the values can be doubled during the next iteration and added to the values in the next column; cf. step 3.(c)(iii). Steps 3.(c)(iv) and 3.(c)(vi) are carried out by a multiplication or by a division.

If two integers $b_1$ and $b_2$ are then written as $b_i = \Sigma_{t=1}^{m} b_{i,j} 2^j$, a column consists of a pair of coefficients $(b_{1,t}, b_{2,t})$ from the above representations. The ordered sequence of such columns is the common representation of $b_1$ and $b_2$. The number of non-vanishing columns in a common representation is referred to as the Hamming weight of the representation, and the density thereof is the quotient of the Hamming weight to the length m.

The average Hamming weight of a joint representation of two N[on]A[djacent]F[orm]s is 5/9. It is possible to demonstrate that the number of multiplications to be expected in the main loop of the above second algorithm from the third example of embodiment is 11$n$/27 (cf. R. Avanzi, "On the complexity of certain multi-exponentiation techniques in cryptography", published in Journal of Cryptology), wherein the additional group operations which may be caused by the almost-online technique are ruled out.

The assumption that $L$ is either the native word length of the C[entral]P[rocessing]U[nit] of the smart card or a small multiple thereof, for example $L$ = 32, also allows simpler implementation.

Using exponents having 160 bits and taking account of the fact that a N[on]A[djacent]F[orm] can efficiently be stored with only two bits per coefficient, approximately sixteen bytes of R[andom]A[ccess]M[emory] are required to store the two recoded 32-bit chunks (= the two recoded 32-bit sections or the two recoded 32-bit parts) instead of the eighty bytes for the full exponents. The saving in terms of storage space corresponds to the storage requirement of one point in projective coordinates on an elliptic curve over a finite field having 160 bits, and is thus not as considerable as in the two preceding examples.

Based on a computer program which counts the number of windows formed by the above second algorithm from the third example of embodiment on pairs of numbers of given length, the average of the results from one hundred thousand run-throughs of the program can then be computed:

The average number of windows on pairs of numbers having 160 bits is 65.81153 (it should be noted that (11/27) 160 = 65.185), the average number of windows on pairs of numbers having 32 bits is 13.64216 (it should be noted that (11/27) 32 = 13.037). Consequently, it is to be expected, if $n$ = 160 and $L$ = 32, that the almost-online algorithm requires only 5 13.64216 - 65.81153 = 2.39927, that is to say about 2.4 more group operations than the above first algorithm from the third example of embodiment.

Since 235 is the total number of group operations of the above first algorithm from the third example of embodiment which is to be expected in the case where $n$ = 160, it may be estimated that the loss in terms of performance caused by the almost-online technique used according to the invention is approximately one percent.

There is an alternative representation to the N[on]A[djacent]F[orm] with the same Hamming weight, which can be computed by a simple algorithm that operates from left to right (cf. M. Joye and S.-M. Yen, "Optimal left-to-right binary signed-digit recoding", IEEE Transactions on Computers 49 (7), 2000, pages 740 to 748). The question may be raised as to whether this representation could not be used instead of the almost-online recoding. The reason for the negative response is that this alternative does not have the N[on]A[djacent]F[orm] property, that is to say two successive coefficients should not both vanish.

The associated effects on the storage requirement are very poor. In the present case where $w$ = 2 = $d$, the set $E$ would consist of the elements $g_1{}^a \cdot g_2{}^b$ with either $0 < a \leq 3$ and $-3 \leq b \leq 3$, wherein a and/or b is uneven, or $a = 0$ and $b = 1$ or $b = 3$; accordingly, the set E would have the cardinality 20; this would make the storage requirement of the above first algorithm of the third example of embodiment too great.

A similar consideration arises in respect of Solinas' "J[oint]S[parse]F[orm] - joint sparse representation" (cf. J. A. Solinas, "Low-Weight Binary Representations for Pairs of Integers", Centre for Applied Cryptographic Research, University of Waterloo, Combinatorics and Optimization Research Report CORR 2001-41, 2001, obtainable at http: //www.cacr.math.uwaterloo.ca/techreports/2001/corr2001-41.ps):

The joint sparse representation recodes the two exponents at the same time and in a manner dependent on one another. The average density of the J[oint]S[parse]F[orm] is 1/2 and the number of group operations in the main loop of the above first algorithm from the third example of embodiment with $w$ = 2 = $d$ is 3$n$/8 (as before, without including the precomputations and costs of almost-online recoding).

The number of precomputed points is twelve, and this is much greater than the number eight in the variant proposed above, without the throughput of the algorithm being considerably improved with inputs from 160 bits to 256 bits. For a more detailed discussion and for corresponding evidence, reference may be made to Sections 3.3 and 4.4 of H. Cohen, "Analysis of the flexible window powering algorithm", advance copy obtainable at http://www.math.u-bordeaux.fr/~cohen/.

**Fourth example: single scalar multiplication**

Single scalar multiplication in an additively written Abelian group $G$ is obtained, in comparison to the above first example (single exponentiation), by obvious replacements [<--> neutral element "0", "doubling", "sum" in scalar multiplication instead of neutral element "1 ", "squaring", "product" in exponentiation] and is shown below in the context of the fourth example of embodiment of almost-online recoding as an algorithm in which the following are entered

- a basic element $g$ of the Abelian group $G$,
- an integer $e$ having $n$ bits,
- a window width $w$ and

- a chunk or part width $L >> w$;

the (single) scalar multiplication e·g is output:

Step 1.  $x \leftarrow 0$

Step 2.

$r \leftarrow \lceil n/L \rceil$, then $e = \sum_{k=0}^{r-1} e_k 2^{kL}$ for $0 \le e_k < 2^L$

Step 3.  for $k = r-1$ downto 0 do {

(a)

recode $(e_k) \rightarrow e_k = \sum_{j=0}^{L} b_j 2^j$

(b)  if $b_L \ne 0$ then $x \leftarrow x + b_L g$

(c)  for $j = L-1$ downto 0 do {

(i)  $x \leftarrow 2x$

(ii)  $x \leftarrow x + b_j g$ } }

Step 4.  return $x$

Analogously to the first example, it should be noted here that it may happen after $L$ bits that the above algorithm carries out two group multiplications in a row instead of only one group multiplication. This happens if one of the chunks $e_i$ (= one of the exponent parts $e_i$) represents an uneven number and if the recoding of the following chunk $e_{i+1}$ (= of the following exponent part $e_{i+1}$) is one coefficient longer ($b_L$ not equal to zero).

## Fifth example of embodiment: multi-scalar multiplication

The above algorithm from the fourth example (single scalar multiplication) can be transformed into a multi-(scalar) multiplication method. Here, the multi-scalar multiplication is obtained in an additively written Abelian group $G$, in comparison to the above second example of embodiment (multi-exponentiation), by obvious replacements [<--> neutral element "0" "doubling", "sum" in multi-scalar multiplication instead of neutral element "1", "squaring", "product" in multi-exponentiation] and is shown below in the context of the fifth example of embodiment of almost-online recoding as an algorithm.

If group elements $g_1, ..., g_d \varepsilon G$ and exponents $e_1, ..., e_d$ where $d > 1$ are given and $\Sigma_{i=1}^{d} e_i \cdot g_i$ is to be computed, firstly a decision is made to use a sparse recoding of the exponents $e_1, ..., e_d$; use is then made of a "square-and-multiply" loop:

Firstly, all the multiples $c \cdot g_i$ are computed and stored, wherein $c$ is a permissible positive coefficient. A temporary variable $x$ is then set to 0 $\varepsilon$ $G$. For $j = n, n-1, ..., 0$, $x$ is first doubled, and for $i = 1, ..., d$ the operand $e_{i,j} \cdot g_i$ is added to the doubled $x$, wherein $e_{i,j}$ is the coefficient of $2^j$ in the recoding of $e_i$. At the end, the temporary variable $x$-contains the desired result.

This method is also referred to as fast multiplication; as in the situation according to the fourth example, it is once again desirable to retain the advantages of a good right-to-left recoding without having to use too much memory.

The following variant carries out recoding "almost-online", that is to say almost during the fast multi-scalar multiplication or shortly after the fast multi-scalar multiplication, wherein the following are entered in the algorithm

- basic elements $g_1, ..., g_d$ of the Abelian group $G$,
- integers $e_1, ..., e_d$ ($d > 1$) each having at most $n$ bits,
- a window width $w$,
- a chunk or part width $L >> w$ and
- precomputed multiples $c \cdot g_i$ for all $c$ in the set of coefficients;

the multi-scalar product $\Sigma_{i=1}^{d} e_i \cdot g_i$ is output:

Step 1.  $x \leftarrow 0$

Step 2.

$r \leftarrow \lceil n/L \rceil$, then $e_i = \sum_{k=0}^{r-1} e_{i,k} 2^{kL}$

(continued)

for $0 \leq e_{i,k} < 2^L$ and $i = 1, ..., d$

Step 3.   for $k = r - 1$ downto 0 do {

(a)      for $i = 1$ to $d$ do {

$$\text{recode } (e_{i,k}) \rightarrow e_{i,k} = \sum_{j=0}^{L} b_{i,j} 2^j$$

if $b_{i,L} \neq 0$ then $x \leftarrow x + b_{i,L} g_i$}

(b)      for $j = L - 1$ downto 0 do {

(i)                     $x \leftarrow 2x$

(ii)                    for $i = 1$ to $d$ do {if $b_{i,L} \neq 0$ then $x \leftarrow x + b_{i,j} \cdot g_i$}

Step 4.   return $x$

As a final part of the description, a list is given below of the numbers, elements, exponents, groups, indices, coefficients, sets, parameters, scalars, variables and digits mentioned in the present text:

$b_{i,j}$      coefficient

$b_{i,L}$      coefficient assigned to the highest power of two $2^L$

$c$      permissible positive coefficient

$C$      finite set of integers

$d$      number of (basic or group) elements $g_i$ from the group $G$ = number of exponents or scalars $e_i$ assigned to the (basic or group) elements $g_i$

$e$      exponent, in particular integer exponent, in the case of single exponentiation or scalar, in particular integer scalar, in the case of single scalar multiplication

$e_i$      exponent, in particular integer exponent, in the case of multi-exponentiation or scalar, in particular integer scalar, in the case of multi-scalar multiplication

$e_{i,k-1}$      (exponent or scalar) chunk or (exponent or scalar) part following the (exponent or scalar) chunk or (exponent or scalar) part $e_{i,k}$

$e_{i,k}$      (exponent or scalar) chunk or (exponent or scalar) part of the divided exponent or scalar $e_i$

$g$      (basic or group) element in the case of single exponentiation or in the case of single scalar multiplication

$g_i$      (basic or group) element in the case of multi-exponentiation or in the case of multi-scalar multiplication

$G$      group, in particular Abelian group

$i$      index

$j$      index, in particular summation index

$k$      variable, in particular indexed variable

$L$      (exponent or scalar) chunk width or (exponent or scalar) part width, in particular bit rate of the (exponent or scalar) chunk width or of the (exponent or scalar) part width

$n$      maximum bit rate or maximum bit length

$r$      number of (exponent or scalar) chunks or (exponent or scalar) parts $e_{i,k}$

$w$      parameter

$x$      temporary variable

## Claims

1.   A method for *cryptographic operations in at least one cryptosystem, in particular in at least one public key cryptosystem, in at least one key exchange system or in at least one signature system, the method being implemented in at least one microprocessor, in particular being allocated to at least one chip card and/or to at least one smart card, with the method comprising* the multi-exponentiation ($\Pi_{i=1}^{d} g_i^{e_i}$) or the multi-scalar multiplication ($\Sigma_{i=1}^{d} e_i \cdot g_i$) of elements ($g_i$) by means of at least one exponent or scalar ($e_i$), in particular an integer exponent or scalar, which has a maximum bit length ($n$), which elements ($g_i$; $g$) derive from at least one group ($G$), for example an Abelian group, which

- in the case of multi-exponentiation is notated in particular multiplicatively and

- in the case of multi-scalar multiplication is notated in particular additively, the method further comprising the following method steps for each value $i$ = 1, 2, ..., $d$ of an index ($i$), wherein $d$ *is greater than 1 and* is defined as the number of elements ($g_i$), in particular depending on the number of exponents or scalars ($e_i$) assigned to the elements ($g_i$):

[a.1] computing and storing or
[a.2] retrieving from at least one memory

all powers $\left(g_i^c\right)$ or all multiples ($c \cdot g_i$), wherein $c$ is a positive coefficient;

[b] dividing each exponent or scalar ($e_i$) into a number of chunks ($e_{i,k}$) having a chunk width defined by a specific bit length ($L$); and
[c] individually recoding the chunks *($e_{i,k}$), wherein*

- *the recoded chunk ($e_{i,k}$) is used once and*
- *the memory unit in which the recoded chunk ($e_{i,k}$) is stored is used to recode the following chunk ($e_{i,k-1}$).*

2. A method as claimed in claim 1, **characterized in that** the exponent or scalar ($e_i$) is represented in the divided form $e_i = \Sigma_{k=0}^{r-1} e_{i,k} 2^{kL}$, wherein

- $r$ is defined as the number of chunks ($e_{i,k}$), in particular as an integer quotient of the maximum bit length ($n$) and the bit length ($L$) of the chunk width, and
- $0 \leq e_{i,k} < 2^L$.

3. A method as claimed in claim 1 or 2, **characterized in that** the chunk width ($L$) is selected to be

- significantly greater than a parameter ($w$) which corresponds to the width, in particular to the upper limit of the width, of a window over which the bits of the respective exponent or scalar ($e_i$) are read, and
- significantly shorter than the maximum length of each exponent or scalar ($e_i$), in particular is selected prior to method step [a.1] and/or [a.2].

4. A method as claimed in at least one of claims 1 to 3, **characterized in that**

- in the case of multi-exponentiation, method step [c] of recoding the chunks ($e_{i,k}$) can be divided into the following substeps for each individual chunk ($e_{i,k}$) of each exponent ($e_i$):

[c.1] setting a temporary variable ($x$) to a standardized value, in particular to the value 1 of the element of the group ($G$) which is neutral with respect to the group operation assigned to the group ($G$);
[c.2] successively setting a variable ($k$) to the values $r$-1, $r$-2, ..., 0, wherein for each value $k = r$-1, $r$-2, ..., 0 of the variable ($k$) the following substeps are carried out:
[c.2.i] for each value $i$ = 1, 2, ..., $d$ of an index ($i$):

[c.2.i.a] recoding the chunk ($e_{i,k}$) as the sum ($\Sigma_{j=0}^L b_{i,j} 2^j$) of powers of two ($2^j$) weighted by at least one coefficient ($b_{i,j}$) deriving from at least one finite set ($C$) of integers;
[c.2.i.b] if the coefficient ($b_{i,L}$) assigned to the highest power of two ($2^L$) does not vanish: setting the temporary variable ($x$) to the product of temporary variable ($x$) and the power ($g_i^{b_{i,L}}$) of the element ($g_i$) which is assigned to the coefficient ($b_{i,L}$) of the highest power of two ($2^L$);

[c.2.ii] for each value $j = L$-1, $L$-2, ..., 0 of the index ($j$):

[c.2.ii.a] squaring the temporary variable ($x$);
[c.2.ii.b] for each value $i$ = 1, 2, ..., $d$ of the index ($i$):

if the coefficient ($b_{i,j}$) assigned to the power of two ($2^j$) does not vanish: setting the temporary variable ($x$) to the product of temporary variable ($x$) and the power $\left(g_i^{b_{i,j}}\right)$ of the element ($g_i$) which

is assigned to the respective coefficient ($b_{i,j}$) of the power of two ($2^j$); and

- after method step [c] of individually recoding the chunks ($e_{i,k}$) the temporary variable ($x$) is returned.

5. A method as claimed in at least one of claims 1 to 3, **characterized in that**

   - in the case of multi-scalar multiplication, method step [c] of recoding the chunks ($e_{i,k}$) can be divided into the following substeps for each individual chunk ($e_{i,k}$) of each exponent ($e_i$):

      [c.1] setting a temporary variable ($x$) to a standardized value, in particular to the value 0 of the element of the group ($G$) which is neutral with respect to the group operation assigned to the group ($G$);
      [c.2] successively setting a variable ($k$) to the values $r$-1, $r$-2, ..., 0, wherein for each value $k$ = $r$-1, $r$-2, ..., 0 of the variable ($k$) the following substeps are carried out:
      [c.2.i] for each value $i$ = 1, 2, ..., $d$ of an index ($i$):

         [c.2.i.a] recoding the chunk ($e_{i,k}$) as the sum ($\Sigma_{j=0}^{L} b_{i,j} 2^j$) of powers of two ($2^j$) weighted by at least one coefficient ($b_{i,j}$) deriving from at least one finite set ($C$) of integers;
         [c.2.i.b] if the coefficient ($b_{i,L}$) assigned to the highest power of two ($2^L$) does not vanish: setting the temporary variable ($x$) to the sum of temporary variable ($x$) and the multiple ($b_{i,L} g_i$) of the element ($g_i$) which is assigned to the coefficient ($b_{i,L}$) of the highest power of two ($2^L$);

      [c.2.ii] for each value $j$ = $L$-1, $L$-2, ..., 0 of the index ($j$):

         [c.2.ii.a] doubling the temporary variable ($x$);
         [c.2.ii.b] for each value $i$ = 1, 2, ..., $d$ of the index ($i$):

            if the coefficient ($b_{i,j}$) assigned to the power of two ($2^j$) does not vanish: setting the temporary variable ($x$) to the sum of temporary variable ($x$) and the multiple ($b_{i,L} g_i$) of the element ($g_i$) which is assigned to the coefficient ($b_{i,j}$) of the power of two ($2^j$); and

   - after method step [c] of individually recoding the chunks or parts ($e_{i,k}$) the temporary variable ($x$) is returned.

6. A microprocessor adapted to operate in accordance with a method as claimed in at least one of claims 1 to 5.

7. A device, in particular a chip card and/or in particular a smart card, having at least one microprocessor as claimed in claim 6.

8. The use of a method as claimed in at least one of claims 1 to 5 and/or of at least one microprocessor as claimed in claim 6 and/or of at least one device, in particular of at least one chip card and/or in particular of at least one smart card, as claimed in claim 7, in at least one cryptosystem, in particular in at least one public key cryptosystem, in at least one key exchange system or in at least one signature system.

**Patentansprüche**

1. Ein Verfahren für kryptographische Operationen in zumindest einem Kryptosystem, insbesondere in zumindest einem Kryptosystem mit öffentlich bekanntem Schlüssel, in zumindest einem Schlüsselaustauschsystem oder in zumindest einem Signatursystem, wobei das Verfahren in zumindest einem Mikroprozessor ausgeführt wird, der insbesondere zumindest einer Chipkarte und/oder zumindest einer Smartkarte zugeordnet ist, wobei das Verfahren umfasst: die Multi-Exponentiation ($\pi_{i=1}^{d} g^{ei}$) oder die Multi-Skalarmultiplikation ($\Sigma_{i=1}^{d} e_i g_i$) von Elementen ($g_i$) mit Hilfe zumindest eines Exponenten oder Skalars ($e_i$), insbesondere eines ganzzahligen Exponenten oder Skalars, der eine maximale Bitlänge ($n$) aufweist, wobei sich die Elemente ($g_i$;$g$) von zumindest einer Gruppe ($G$), beispielsweise einer Abelschen Gruppe, ableiten, die

   - im Falle von Multi-Exponentiation insbesondere multiplikativ notiert ist und
   - im Falle von Multi-Skalarmultiplikation insbesondere additiv notiert ist,

   wobei das Verfahren ferner folgende Verfahrensschritte für jeden Wert $i$ = 1,2, ..., d eines Index ($i$) umfasst, wobei $d$ größer als 1 ist und als die Anzahl an Elementen ($g_i$) definiert ist, die insbesondere von der Anzahl der den Elementen ($g_i$) zugeordneten Exponenten oder Skalare ($e_i$) abhängig ist:

[a.1] Berechnen und Speichern oder
[a.2] Abrufen aus zumindest einem Speicher
aller Potenzen ($g_i^c$) oder aller Vielfachen ($cg_i$), wobei $c$ ein positiver Koeffizient ist,
[b] Teilen jedes Exponenten oder Skalars ($e_i$) in eine Anzahl an Blöcken ($e_{i,k}$) mit einer Blockbreite, die durch eine spezifische Bitlänge ($L$) definiert ist, und
[c] individuelles Rekodieren der Blöcke ($e_{i,k}$), wobei

- der rekodierte Block ($e_{i,k}$) einmalig genutzt wird und
- die Speichereinheit, in welcher der rekodierte Block ($e_{i,k}$) gespeichert wird, genutzt wird, um den folgenden Block ($e_{i,k-1}$) zu rekodieren.

2. Ein Verfahren nach Anspruch 1, **dadurch gekennzeichnet, dass** der Exponent oder Skalar ($e_i$) in der geteilten

Form ($e_i = \sum_{k=0}^{r-1} e_{i,k} 2^{kL}$) dargestellt ist, wobei

- $r$ als die Anzahl an Blöcken ($e_{i,k}$), insbesondere als ein ganzzahliger Quotient der maximalen Bitlänge ($n$) und der Bitlänge ($L$) der Blockbreite, definiert ist und
- $0 \leq e_{i,k} < 2^L$.

3. Ein Verfahren nach Anspruch 1 oder 2, **dadurch gekennzeichnet, dass** die Blockbreite ($L$) so ausgewählt ist, dass sie

- wesentlich größer als ein Parameter ($w$) ist, welcher der Breite, insbesondere der oberen Grenze der Breite, eines Fensters, über das die Bits des entsprechenden Exponenten oder Skalars ($e_i$) gelesen werden, entspricht, und
- wesentlich kürzer als die maximale Länge jedes Exponenten oder Skalars ($e_i$) ist, insbesondere vor dem Verfahrensschritt [a.1] und/oder [a.2] ausgewählt wird.

4. Ein Verfahren nach zumindest einem der Ansprüche 1 bis 3, **dadurch gekennzeichnet, dass**

- im Falle von Multi-Exponentiation der Verfahrensschritt [c] des Rekodierens der Blöcke ($e_{i,k}$) in folgende Teilschritte für jeden einzelnen Block ($e_{i,k}$) jedes Exponenten ($e_i$) unterteilbar ist:

[c.1] Einstellen einer temporären Variablen ($x$) auf einen standardisierten Wert, insbesondere auf den Wert 1 des Elements der Gruppe ($G$), das in Bezug auf die der Gruppe ($G$) zugeordnete Gruppenoperation neutral ist,
[c.2] schrittweises Einstellen einer Variablen ($k$) auf die Werte $r$-1, $r$-2, ..., 0, wobei für jeden Wert $k = r$-1, $r$-2, ..., 0 der Variablen ($k$) die folgenden Teilschritte ausgeführt werden:

[c.2.i] für jeden Wert $i = 1, 2, ..., d$ eines Index ($i$):
[c.2.i.a] Rekodieren des Blocks ($e_{i,k}$) als die Summe ($\Sigma_{j=0}^{L} b_{i,j} 2^j$) von Zweierpotenzen ($2^j$), die durch zumindest einen Koeffizienten ($b_{i,j}$), der sich von zumindest einem endlichen Satz ($C$) ganzer Zahlen ableitet, gewichtet ist,
[c.2.i.b] sofern der Koeffizient ($b_{i,L}$), welcher der höchsten Zweierpotenz ($2^L$) zugeordnet ist, nicht verschwindet: Einstellen der temporären Variablen ($x$) auf das Produkt aus temporärer Variable ($x$)

und der Potenz ($g_i^{b_{i,L}}$) des Elements ($g_i$), das dem Koeffizienten ($b_{i,L}$) der höchsten Zweierpotenz ($2^L$) zugeordnet ist,

[c.2.ii] für jeden Wert $j = L$-1, $L$-2, ..., 0 des Index ($j$):

[c.2.ii.a] Quadrieren der temporären Variablen ($x$),
[c.2.ii.b] für jeden Wert $i = 1, 2, ..., d$ des Index ($i$):

sofern der Koeffizient ($b_{i,j}$), welcher der Zweierpotenz ($2^j$) zugeordnet ist, nicht verschwindet: Einstellen der temporären Variablen ($x$) auf das Produkt aus temporärer Variable ($x$) und der Potenz

$(g_i^{b_{i,j}})$ des Elements ($g_i$), das dem jeweiligen Koewzienten ($b_{i,j}$) der Zweierpotenz ($2^j$) zugeordnet ist, und

- nach Verfahrensschritt [c] des individuellen Rekodierens der Blöcke ($e_{i,k}$) die temporäre Variable ($x$) zurückgesandt wird.

**5.** Ein Verfahren nach zumindest einem der Ansprüche 1 bis 3, **dadurch gekennzeichnet, dass**

- im Falle von Multi-Skalarmultiplikation der Verfahrensschritt [c] des Rekodierens der Blöcke ($e_{i,k}$) in die folgenden Teilschritte für jeden einzelnen Block ($e_{i,k}$) jedes Exponenten ($e_i$) unterteilbar ist:

[c.1] Einstellen einer temporären Variablen ($x$) auf einen standardisierten Wert, insbesondere auf den Wert 0 des Elements der Gruppe ($G$), das in Bezug auf die der Gruppe (G) zugeordneten Gruppenoperation neutral ist,
[c.2] schrittweises Einstellen einer Variablen ($k$) auf die Werte $r$-1, $r$-2, ..., 0, wobei für jeden Wert $k = r$-1, $r$-2, ..., 0 der Variablen ($k$) die folgenden Teilschritte ausgeführt werden:

[c.2.i] für jeden Wert $i$ = 1, 2, ..., d eines Index ($i$):

[c.2.i.a] Rekodieren des Blocks ($e_{i,k}$) als die Summe ($\Sigma_{j=0}^{L} b_{i,j} 2^j$) von Zweierpotenzen ($2^j$), die durch zumindest einen Koeffizienten ($b_{i,j}$), der sich von zumindest einem endlichen Satz ($C$) ganzer Zahlen ableitet, gewichtet ist,
[c.2.i.b] sofern der Koeffizient ($b_{i,L}$), welcher der höchsten Zweierpotenz ($2^L$) zugeordnet ist, nicht verschwindet: Einstellen der temporären Variablen ($x$) auf die Summe aus temporärer Variable ($x$) und dem Vielfachen ($b_{i,L}g_i$) des Elements ($g_i$), das dem Koeffizienten ($b_{i,L}$) der höchsten Zweierpotenz ($2^L$) zugeordnet ist,

[c.2.ii] für jeden Wert $j = L$-1, $L$-2, ..., 0 des Index ($j$):

[c.2.ii.a] Verdoppeln der temporären Variablen ($x$),
[c.2.ii.b] für jeden Wert $i$ = 1, 2, ..., d des Index ($i$):

sofern der Koeffizient ($b_{i,j}$), welcher der Zweierpotenz ($2^j$) zugeordnet ist, nicht verschwindet: Einstellen der temporären Variablen ($x$) auf die Summe aus temporärer Variable ($x$) und dem Vielfachen ($b_{i,L}g_i$) des Elements ($g_i$), das dem Koeffizienten ($b_{i,j}$) der Zweierpotenz ($2^j$) zugeordnet ist, und

- nach Verfahrensschritt [c] des individuellen Rekodierens der Blöcke oder Teile ($e_{i,k}$) die temporäre Variable ($x$) zurückgesandt wird.

**6.** Ein Mikroprozessor, der so gestaltet ist, dass er gemäß einem Verfahren nach zumindest einem der Ansprüche 1 bis 5 funktioniert.

**7.** Eine Vorrichtung, insbesondere eine Chipkarte und/oder insbesondere eine Smartkarte, mit zumindest einem Mikroprozessor nach Anspruch 6.

**8.** Die Verwendung eines Verfahrens nach zumindest einem der Ansprüche 1 bis 5 und/oder zumindest eines Mikroprozessors nach Anspruch 6 und/oder zumindest einer Vorrichtung, insbesondere zumindest einer Chipkarte und/oder insbesondere zumindest einer Smartkarte, nach Anspruch 7 in zumindest einem Kryptosystem, insbesondere in zumindest einem Kryptosystem mit öffentlich bekanntem Schlüssel, in zumindest einem Schlüsselaustauschsystem oder in zumindest einem Signatursystem.

**Revendications**

**1.** Procédé pour des *opérations cryptographiques dans au moins un cryptosystème, en particulier dans au moins un cryptosystème à clé publique, dans au moins un système d'échange de clés ou dans au moins un système de*

*signature, le procédé étant réalisé dans au moins un micro-processeur, en particulier en étant affecté à au moins une carte à puce et/ou au moins une carte à puce intelligente, avec le procédé comprenant la multi-exponentiation*

$(\prod_{i=1}^{d} g_i^{e_i})$ ou la multiplication multi-scalaire $(\sum_{i=1}^{d} e_i g_i)$ des éléments (*gi*) par au moins un exposant ou un scalaire (*ei*), en particulier un exposant ou un scalaire entier, qui a une longueur maximale en bits (*n*), lesquels éléments (*gi ; g*) dérivent d'au moins un groupe (*G*), par exemple d'un groupe abélien, qui

- dans le cas de la multi-exponentiation est noté en particulier avec une notation multiplicative, et
- dans le cas de la multiplication multi-scalaire est noté en particulier avec une notation additive,

le procédé comprenant en outre
les étapes de procédé suivantes pour chacune des valeurs *i* = 1, 2, .., d d'un indice (*i*), *dans lequel d est supérieur à 1 et est défini* comme le nombre d'éléments *(gi)* dépendant en particulier du nombre d'exposants ou de scalaires (*ei*) affectés aux éléments (*gi*) :

[a.1] calculer et stocker ou
[a.2] récupérer à partir d'au moins une mémoire

toutes les puissances $(g_i^c)$ ou tous les multiples (*cgi*) où c est un coefficient positif ;
[b] diviser chaque exposant ou scalaire (*ei*) en un certain nombre de fragments ($e_{i,k}$) ayant une largeur de fragment définie par longueur particulière en bits (*L*) *;* et
[c] recoder séparément les fragments ($e_{i,k}$) *dans lequel*

- *le fragment recodé* ($e_{i,k}$) *est utilisé une fois et*
- *l'unité de mémoire dans laquelle le fragment recodé* ($e_{i,k}$) *est stocké est utilisée pour recoder le fragment suivant* ($e_{i,k\text{-}1}$).

**2.** Procédé selon la revendication 1, **caractérisé par le fait que** l'exposant ou le scalaire *(ei)* est représenté sous la forme divisée $e_i = \sum_{k=0}^{r-1} e_{i,k} 2^{kL}$ , dans laquelle

- *r* est défini comme le nombre de fragments ($e_{i,k}$), en particulier en tant que quotient entier de la longueur maximum en bits (*n*) et de la longueur en bits (*L*) de la largeur du fragment, et
- $0 < e_{i,k} < 2^L$

**3.** Procédé selon la revendication 1 ou la revendication 2, **caractérisé par le fait que** la largeur du fragment (*L*) est choisie de manière à être

- *significativement* plus grande qu'un paramètre (*w*) qui correspond à la largeur, en particulier à la limite supérieure de la largeur, d'une fenêtre à travers laquelle sont lus les bits de l'exposant ou du scalaire correspondants (*ei*), et
- significativement plus court que la longueur maximum de chaque exposant ou scalaire (*ei*), en particulier sélectionnée avant le pas de procédé [a.1] et/ou [a.2].

**4.** Procédé selon l'une au moins des revendications 1 à 3, **caractérisé par le fait que**

- dans le cas de la multi-exponentiation, l'étape de procédé [c] de recodage des fragments ($e_{i,k}$) peut être divisée selon les sous-étapes suivantes pour chacun des différents fragments ($e_{i,k}$) de chaque exposant (*ei*) :

[c.1] définir une variable temporaire (*x*) à une valeur standardisée, en particulier à la valeur 1 de l'élément du groupe (*G*) qui est neutre par rapport à l'opération de groupe affectée au groupe (*G*) ;
[c.2] définir successivement une variable (*k*) aux valeurs *r*-1, *r*-2, ..., 0, dans lequel pour chaque *valeur k* = *r*-1, *r*-2, .., 0 de la variable (*k*), les sous-étapes suivantes sont exécutées :

[c.2.i] pour chaque valeur *i* = 1, 2, .., d d'un indice (*i*) :

[c.2.i.a] recoder le fragment ($e_{i,k}$) en tant que la somme $\left(\sum_{j=0}^{L} b_{i,j} 2^j\right)$ des puissances de deux ($2^j$) pondérée par au moins un coefficient ($b_{i,j}$) déduit d'un ensemble fini au moins (C) d'entiers ;

[c.2.i.b] si le coefficient ($b_{i,L}$) affecté à la puissance de deux la plus élevée ($2^L$) ne disparait pas : définir la variable temporaire ($x$) comme le produit de la variable temporaire ($x$) et de la puissance $\left(g_i^{b_{i,L}}\right)$ de l'élément ($g_i$) qui est affecté au coefficient ($b_{i,L}$) de la puissance de deux la plus élevée ($2^L$) ;

[c.2.ii] pour chaque valeur j = $L$-1, $L$-2, .., 0 de l'indice ($j$) :

[c.2.ii.a] élever au carré la variable temporaire ($x$) ;
[c.2.ii.b] pour chaque valeur $i = 1, 2, .., d$ de l'indice ($i$) :

si le coefficient ($b_{i,j}$) affecté à la puissance de deux ($2^j$) ne disparait pas : définir la variable temporaire ($x$) comme le produit de la variable temporaire ($x$) et de la puissance $\left(g_i^{b_{i,j}}\right)$ de l'élément ($g_i$) qui est affecté au coefficient respectif ($b_{i,j}$) de la puissance de deux ($2^j$) ; et

- après l'étape de procédé [c] de recodage individuel des fragments ($e_{i,k}$), on retourne la variable temporaire ($x$).

**5.** Procédé selon l'une des revendications 1 à 3, **caractérisé par le fait que**

- dans le cas de la multiplication multi-scalaire, l'étape de procédé [c] de recodage des fragments ($e_{i,k}$) peut être divisée selon les sous-étapes suivantes pour chacun des différents fragments ($e_{i,k}$) de chaque exposant ($ei$) :

[c.1] définir une variable temporaire ($x$) à une valeur standardisée, en particulier à la valeur 0 de l'élément du groupe ($G$) qui est neutre par rapport à l'opération de groupe affectée au groupe ($G$) ;
[c.2] définir successivement une variable ($k$) aux valeurs $r$-1, $r$-2, ..., 0 dans lequel pour chaque valeur $k = r$-1, $r$-2, .., 0 de la variable ($k$), les sous-étapes suivantes sont exécutées :

[c.2.i] pour chaque valeur $i = 1, 2, .., d$ d'un indice ($i$) :

[c.2.i.a] recoder le fragment ( $e_{i,k}$ ) en tant que somme $\left(\sum_{j=0}^{L} b_{i,j} 2^j\right)$ des puissances de deux ($2^j$) pondérée par au moins un coefficient ($b_{i,j}$) déduit d'un ensemble fini au moins (C) d'entiers ;
[c.2.i.b] si le coefficient ($b_{i,L}$) affecté à la puissance de deux la plus élevée ($2^L$) ne disparait pas : définir la variable temporaire ($x$) comme la somme de la variable temporaire ($x$) et du multiple ($b_{i,L}g_i$) de l'élément ($g_i$) qui est affecté au coefficient ($b_{i,L}$) de la puissance de deux la plus élevée ($2^L$) ;

[c.2.ii] pour chaque valeur j = $L$-1, $L$-2, .., $0$ de l'indice ($j$) :

[c.2.ii.a] doubler la variable temporaire ($x$) ;
[c.2.ii.b] pour chaque valeur $i = 1, 2, .., d$ de l'indice ($i$) :

si le coefficient ($b_{i,j}$) affecté à la puissance de deux ($2^j$) ne disparait pas : définir la variable temporaire comme la somme de la variable temporaire ($x$) et du multiple ($b_{i,j}g_i$) de l'élément ($g_i$) qui est affecté au coefficient ($b_{i,j}$) de la puissance de deux ($2^j$) ; et

- après l'étape de procédé [c] de recodage individuel des fragments ou parties ($e_{j,k}$), on retourne la variable temporaire ($x$).

**6.** Microprocesseur agencé pour fonctionner conformément au procédé selon l'une au moins des revendications 1 à 5.

**7.** Dispositif, en particulier carte à puce et/ou en particulier carte à puce intelligente ayant au moins un microprocesseur selon la revendication 6.

8. Utilisation d'un procédé selon l'une au moins des revendications 1 à 5 et/ou au moins d'un microprocesseur selon la revendication 6 et/ou d'un dispositif au moins, en particulier d'au moins une carte à puce et/ou en particulier d'au moins une carte à puce intelligente selon la revendication 7, dans au moins un cryptosystème, en particulier dans au moins un cryptosystème à clé publique, dans au moins un système d'échange de clés ou dans au moins un système de signature.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Improved Techniques for Fast Exponentiation. **Bodo Möller.** Information Security and cryptology - ICISC 2002, fifth international conference revised papers. Springer-Verlag, 2003, vol. 2587, 298-312
- **G. W. Reitwiesner.** Binary arithmetic. *Advances in Computers,* 1960, vol. 1, 231-308
- **S. Arno ; F. S. Wheeler.** Signed digit representations of minimal Hamming weight. *IEEE Transactions on Computers,* 1993, vol. 42, 1007-1010
- **M. Joye ; S.-M. Yen.** Optimal left-to-right binary signed-digit recoding. *IEEE Transactions on Computers,* 2000, vol. 49 (7), 740-748
- **J. Bos ; M. Coster.** Addition chain heuristics. *Advances in Cryptology - CRYPTO '89,* 1990, vol. 435, 400-407
- **A. Menezes ; P. van Oorschot ; S. Vanstone.** Handbook of Applied Cryptography. CRC Press, 1996
- **W. E. Clark ; J. J. Liang.** On arithmetic weight for a general radix representation of integers. *IEEE Transactions on Information Theory,* 1973, vol. IT-19, 823-826
- **E. G. Thurber.** On addition chains 1(mn) ≤ 1(n)b and lower bounds for c(r). *Duke Mathematical Journal,* 1973, vol. 40, 907-913

- **R. Avanzi.** On the complexity of certain multi-exponentiation techniques in cryptography. *Journal of Cryptology*
- Speeding up elliptic cryptosystems by using a signed binary window method. **K. Koyama ; Y. Tsuruoka.** Advances in Cryptology, Proceedings of Crypto '92. Springer-Verlag, 1992, vol. 740, 345-357
- **K. Koyama ; Y. Tsuruoka.** A Signed Binary Window Method for Fast Computing over Elliptic Curves. *IEICE Trans. Fundamentals,* January 1993, vol. E76-A (1), 55-62
- An improved algorithm-for arithmetic on a family of elliptic curves. **J. A. Solinas.** Advances in Cryptology - CRYPTO '97. vol. 1294, 357-371
- **H. Cohen.** Analysis of the flexible window powering algorithm. *Advance*
- **S.-M. Yen ; C.-S. Laih ; A. K. Lenstra.** Multi-exponentiation. *IEE Proc. Comput. Digit. Tech.,* November 1994, vol. 141 (6
- **M. Joye ; S.-M. Yen.** Optimal left-to-right binary signed-digit recoding. *IEEE Transactions on Computers,* 2000, vol. 49 (7), 740-748
- **J. A. Solinas.** Low-Weight Binary Representations for Pairs of Integers. *Centre for Applied Cryptographic Research,* 2001